# FASCICULE DE BREVET EUROPEEN

(11) **EP 2 331 833 B1**
(45) Date de publication et mention de la délivrance du brevet: **18.01.2012**
(21) Numéro de dépôt: 09811076.0
(22) Date de dépôt: 26.08.2009
(51) Int. Cl.: F16C 11/06

(54) **PROTECTEUR DE ROTULE DE VEHICULE**
FINGERKNÖCHELSCHUTZ FÜR EIN FAHRZEUG
KNUCKLE PROTECTOR FOR A VEHICLE

(30) Priorité: 02.09.2008 FR 0855861
(43) Date de publication de la demande: 15.06.2011
(73) Titulaire: A. RAYMOND ET CIE, 38000 Grenoble (FR)
(72) Inventeur: GARCIA, Florent, F-38250 Lans en Vercors (FR)
(74) Mandataire: Rüttgers, Joachim
(86) Numéro de dépôt international: PCT/EP2009/006172
(87) Numéro de publication internationale: WO 2010/025866

(56) Documents cités:
- EP-A- 0 570 736
- EP-A- 0 658 469
- EP-A- 1 653 094
- US-A1- 2005 152 738

## Description

L'invention concerne un dispositif pour protéger un joint rotule qui est par exemple un élément de la direction avant ou d'une suspension d'un véhicule.

Dans le domaine de la mécanique automobile, un tel joint rotule encore appelé rotule est monté sur la fusée au niveau du triangle de suspension ou sur la fusée au niveau de la crémaillère de direction. Dans les deux cas la rotule est très proche du disque de frein qui est ponctuellement une source de chaleur importante. Par exemple, la température du disque de frein d'un véhicule utilitaire chargé peut atteindre jusqu'à 700°C.

Une rotule comprend principalement une articulation de rotule qui est sertie pour réaliser l'articulation et un soufflet en caoutchouc élastomère enveloppant l'ensemble pour la protéger notamment contre la poussière.

L'inconvénient de ce type de rotule est que le matériau utilisé pour le soufflet est très sensible aux températures élevées et la proximité du disque de frein endommage fortement ce soufflet.

Dans ce contexte, il apparaît essentiel de protéger le joint rotule des fortes températures. Ce problème est résolu de manière classique en utilisant un grand flasque disposé entre le disque de frein et la rotule afin de protéger une grande surface de la rotule. Toutefois cette solution reste coûteuse en terme de matière à fournir.

On connait du document EP0890500 un dispositif de protection pour joint rotule de véhicule qui comprend une bride annulaire de fixation sur la rotule, un écran thermique qui s'étend en hauteur sensiblement perpendiculairement à la bride et en largeur sensiblement le long de la périphérie annulaire de la bride. La bride et l'écran sont formés d'une seule pièce par une opération d'emboutissage profond réalisée à partir d'une feuille métallique. Cette opération est le plus souvent réalisée en plusieurs passes, c'est-à-dire en plusieurs emboutissages. Le procédé est non seulement long mais il est également coûteux en énergie, en manipulation et en outillage d'emboutissage.

On connaît également du document EP0658469 un bouclier thermique pour un joint à rotule, fait d'une seule pièce, avec une bride circulaire (58) prolongée sur une partie de son contour par extension radiale (62), séparée de la bride par des échancrures (68), l'extension radiale (62) étant elle-même prolongée de façon perpendiculaire, par une aile cylindrique (64) venue par pliage.

La présente invention vise à proposer un dispositif de protection de joint rotule de véhicule qui soit plus simple à fabriqueret moins coûteux. Un autre but visé est d'obtenir un dispositif de protection résistant aux déformations pour ne pas endommager les éléments de direction ou de suspension à proximité.

A cet effet l'invention a pour objet un dispositif de protection pour joint rotule par exemple de direction et/ou suspension d'un véhicule, comprenant une bride annulaire de fixation au joint rotule et un écran thermique, cet écran s'étendant en hauteur sensiblement perpendiculairement à la bride et en largeur sensiblement le long de la périphérie annulaire de la bride, caractérisé en ce que l'écran et la bride sont formés d'une seule pièce dans une tôle pliée dans une zone de liaison entre l'écran et la bride, l'écran ayant en outre une partie de surface se présentant sous la forme d'une aile latérale qui s'étend le long de la périphérie annulaire de la bride, cette aile latérale étant séparée de la bride par une échancrure dans la tôle en forme de fente.

Cet agencement contribue à l'obtention d'un dispositif de protection obtenu principalement par pliage d'une tôle dans la mesure où la longueur de la zone de liaison entre l'écran et la bride n'est pas trop importante. On comprend que cette échancrure en forme de fente séparant l'aile latérale de la bride permet à la fois d'obtenir une large surface de protection avec une zone de liaison suffisamment courte pour former le dispositif par pliage. Contrairement à une opération d'emboutissage profond, le pliage est une opération simple et rapide, peu coûteuse et qui peut être réalisée par une machine outil classique.

D'autre part une résistance de l'écran avec une ou deux ailes latérales satisfaisante à la déformation, par exemple sous l'effet des vibrations du véhicule, est obtenue très simplement par un moyen de blocage fabriqué facilement par une découpe et un pliage de la tôle au niveau de chaque aile et de la bride.

Le dispositif de protection selon l'invention peut présenter les particularités suivantes :
- le moyen de blocage est formé par deux pattes découpées et pliées sur la bride pour pincer le bord inférieur d'une aile ;
- le moyen de blocage est formé par une patte formée sur la tôle d'aile et par un trou découpé dans la bride;
- des nervures de renfort sur chaque aile latérale ;
- chaque aile latérale a une largeur sensiblement égale à la moitié de ladite zone de liaison entre l'écran et la bride ;
- la bride comporte une collerette de centrage qui entoure l'ouverture annulaire de la bride.

Un exemple d'un premier et d'un deuxième mode de réalisation particulier d'un dispositif de protection selon l'invention est décrit plus en détail ci-après et illustré par les dessins. Cette description n'est donnée qu'à titre d'exemple indicatif et nullement limitatif de l'invention.
La figure 1 illustré le dispositif de protection selon un premier mode de réalisation de l'invention.
La figure 2 montre le dispositif de protection en position installé sur un joint rotule.
La figure 3 illustre le dispositif de protection selon un deuxième mode de réalisation de l'invention.

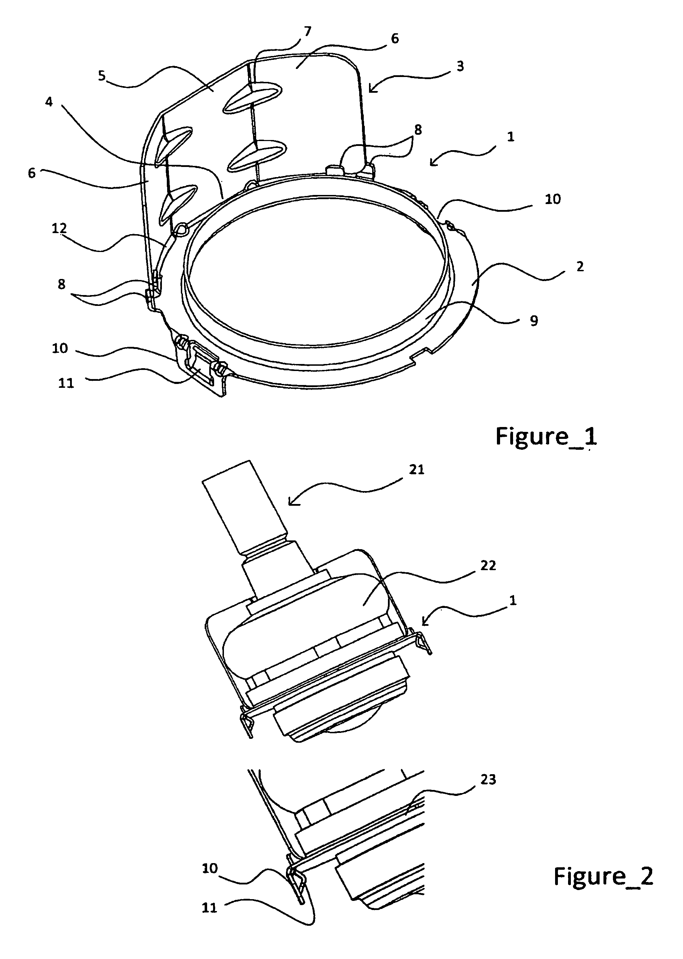

Sur la figure 1, on montre un dispositif de protection 1 pour joint rotule (illustré figure 2) de véhicule comprenant principalement une bride annulaire 2 de fixation au joint rotule, ici sous la forme d'une sorte de disque avec une ouverture centrale, et un écran thermique 3 de protection contre la chaleur émise par les disques de freins. L'écran 3 s'étend en hauteur sensiblement perpendiculairement à la bride 2 et en largeur sensiblement le long de la périphérie annulaire de la bride.

L'ouverture centrale de la bride de fixation 2 est de forme circulaire de sorte à épouser le contour extérieur également circulaire de la rotule lors du passage de celle-ci pour l'installation du dispositif de protection. Par exemple, le diamètre intérieur de l'ouverture mesure 44 millimètres et le diamètre extérieur de la bride annulaire 2 mesure 55 millimètres.

L'écran thermique 3 est de forme sensiblement rectangulaire et de dimensions suffisantes pour protéger toute la surface du soufflet en caoutchouc de la rotule en déviant les effets de la chaleur et en créant une zone d'air. Par exemple l'écran peut avoir une taille de 57 millimètres de largeur et de 28 millimètres de hauteur.

L'écran s'étend le long de la périphérie extérieure de la bride annulaire de fixation 2. Il est relié à la bride 2 le long d'une liaison de pliage ou zone de liaison 4 constituant une partie centrale 5 du bord longitudinal de l'écran 3. Cette zone de liaison 4 définit le corps central 5 de l'écran 3 qui s'étend axialement à partir de la zone de liaison 4.

L'écran thermique 3 comprend en outre une ou deux ailes latérales 6 disposées de chaque côté du corps central 5. Les ailes latérales s'étendent le long de la périphérie annulaire de la bride 2. Selon l'invention, elles sont séparées de la bride 2 par une échancrure en forme de fente 12. Les ailes latérales 6 sont ainsi disjointes de la bride 2, c'est-à-dire qu'elles ne sont reliées à la bride 2 que par l'intermédiaire du corps central 5 et qu'un espace est laissé libre entre elles et la périphérie extérieure de la bride 2. On comprend que cette échancrure 12 en forme de fente permet d'obtenir à la fois une largeur d'écran suffisante pour protéger la rotule et une zone de liaison 4 suffisamment courte pour plier l'écran par rapport à la bride 2 dans un agencement perpendiculaire. De préférence, les ailes latérales 6 s'étendent au-delà du corps central 5 sur une distance au moins équivalente à environ la moitié de la largeur dudit corps central. Par exemple, le corps central 5 et les ailes latérales 6 mesurent 19 millimètres par 28 millimètres.

La bride de fixation 2 et l'écran 3 sont formés d'un seul tenant, c'est-à-dire qu'ils sont obtenus par découpage d'une seule pièce en tôle ou d'une feuille métallique, dont l'épaisseur est par exemple comprise entre 0.5 et 2 millimètres.

Le dispositif de protection 1 est ensuite formé par simple pliage de l'écran 3 par rapport à la bride de fixation 2 de sorte à ce qu'ils soient sensiblement perpendiculaires l'un avec l'autre. Les ailes latérales sont rabattues pour épouser, avec le corps central, la périphérie extérieure de la bride de fixation 2.

Le dispositif de protection 1 illustré sur la figure 1 en configuration formée est issu des opérations de découpage et de pliage. Par la suite, des nervures de renfort 7 sont obtenues par une opération déformation de la jonction entre le corps central 5 et les ailes latérales 6. De préférence, cette opération est réalisée lorsque l'écran est en configuration formée. En particulier, les nervures 7 s'étendent le long de la largeur de l'écran 3 formant des protubérances dans la partie intérieure de l'écran formé et des rainures dans la partie extérieure. Cet agencement renforce le maintien de l'écran épousant la périphérie de la bride 2.

Par ailleurs, lors de l'étape initiale de découpage de la tôle, il est prévu selon l'invention de former des protubérances en forme de pattes de blocage ou de tenons 8 s'étendant radialement à partir de la périphérie extérieure du disque de fixation 2. Les tenons 8 sont ensuite pliés pour être sensiblement perpendiculaires à la bride 2 de la même manière que l'écran 3. Avantageusement, les pattes de blocage 8 sont positionnées à la périphérie de la bride de fixation 2 de sorte à faire face aux extrémités des ailes latérales 6 lorsque le dispositif de protection 1 est formé. De préférence, au moins une paire de pattes de blocage est prévue face à l'extrémité de chaque aile latérale 6. Les pattes d'une paire sont décalées sur la périphérie externe du disque 2 pour définir un espace radial entre eux qui correspond à l'épaisseur de l'aile latérale. En conséquence, les pattes 8 ainsi agencées pincent le bord inférieur de l'aile de sorte à bloquer l'aile le long de la périphérie annulaire de la bride.

Lors du pliage des ailes latérales 6, ces dernières sont respectivement insérées dans l'espace défini entre chaque paire de pattes de blocage ce qui constitue un moyen de blocage efficace. Avec un tel agencement, les extrémités des ailes latérales 6 sont bloquées selon la direction radiale du disque annulaire 2. On comprend qu'une patte de blocage de chaque paire bloque le déplacement radial de l'aile correspondante vers l'intérieur du disque 2 tandis que l'autre patte de la même paire bloque son déplacement vers l'extérieur du disque 2. On évite ainsi tout mouvement des ailes latérales 6 et toutes déformations du dispositif de protection 1.

En outre, le disque de fixation 2 comprend une collerette de centrage 9 pour l'insertion de la rotule dans l'ouverture centrale et au moins deux pattes de fixation 10 du dispositif de protection sur la rotule.

La collerette de centrage 9 est de forme cylindrique et s'étend de manière coaxiale à partir du bord intérieur de la bride annulaire 2 dans la direction de pliage de l'écran 3. La hauteur de la collerette de centrage 9 est approximativement dix fois inférieure à son diamètre, soit environ égale à 5 millimètres. La collerette de centrage 9 est obtenue par une opération d'emboutissage simple et réalisable en une seule passe par une machine de faible coût. On comprend que la collerette de centrage 9 doit être prévue lors de l'étape de découpage de la feuille métallique de sorte que l'ouverture centrale de la bride annulaire corresponde au joint rotule.

Les pattes de fixation 10 sont des protubérances en forme de dents qui s'étendent axialement à partir de la périphérie extérieure de la bride de fixation 2 dans la direction opposée à la collerette de centrage 9. Les deux pattes de fixations 10 sont disposées diamétralement opposées sur la périphérie extérieure de la bride 2 avec le corps central 5 de l'écran 3 situé dans un plan médian aux deux pattes 10.

Les pattes de fixation 10 sont prévues lors de l'étape de découpage de la tôle et forment alors des protubérances radiales qui sont ensuite pliées selon la direction axiale dans le sens opposé au pliage de l'écran 3.

Chaque patte de fixation 10 a une forme sensiblement rectangulaire avec un côté tangent à la périphérie extérieure de la bride 2. Une étape de découpage supplémentaire d'une forme en « U » dans chaque patte 10 permet de former une languette flexible 11 fixée à l'extrémité de la patte 10. La languette 11 est ensuite déformée pour présenter une section en forme de « S ». En conséquence, la languette flexible 11 est plus courte que la patte de fixation 10 et bombée vers l'intérieure de la bride 2 pour laisser passer et se fixer à la rondelle de la rotule comme cela est illustré sur la figure 2.

Sur la figure 2, on montre un joint rotule 21 de véhicule équipé du dispositif de protection 1 selon l'invention.

L'écran thermique 3 installé fait office de barrière thermique autour du soufflet 22. Le joint rotule est ainsi protégé des échauffements du disque de frein.

Lors de l'opération d'installation, le joint rotule est inséré dans l'ouverture centrale de la bride de fixation 2, la collerette de centrage 9 guidant l'axe de la rotule.

En position finale, la collerette de centrage 9 épouse la périphérie de la rotule 21 et les languettes flexibles 11 viennent s'encliqueter ou se clipper sur la rondelle 23 du joint rotule. La bride de fixation 2 est donc bloquée selon la direction axiale au moyen des pattes de fixation 10 encliquetées sur la rondelle 23. Tout autre moyen de fixation du dispositif de protection sur la rotule peut être prévu. Par exemple, le dispositif de protection peut être fixé serré entre la rondelle et la rotule.

Dans cette position finale, le dispositif de protection 1 est fixé à la rotule 21 avec l'écran 3 protégeant le soufflet 22.

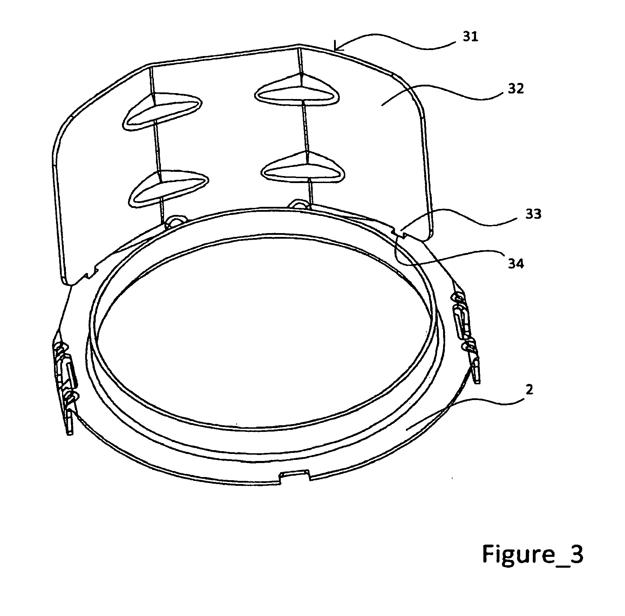

Sur la figure 3, on montre une alternative à la fixation des extrémités des ailes latérales 32.

Dans ce deuxième mode de réalisation, le dispositif de protection selon l'invention 31 présente des ailes latérales 32 équipées de pattes de blocage ou tenons 33 formés sur la tôle d'aile coopérant avec des trous ou ouvertures correspondantes 34 formées au niveau de la périphérie extérieure de la bride de fixation 2.

En particulier, les pattes de blocages 33 s'étendent latéralement en direction de la bride de fixation 2. Ils sont prévus lors de l'étape de découpage de la même manière que les ouvertures correspondantes 34.

Il est entendu que l'on ne s'écarte pas de la portée de l'invention en modifiant les moyens de blocage des extrémités des ailes latérales ou en modifiant les pattes de fixation du dispositif de protection sur le joint rotule. Par exemple une combinaison des moyens de blocage illustrés figure 1 et 3 peut être prévue selon l'invention.

## Revendications

1. Dispositif de protection (1) pour joint rotule (21) par exemple de direction et/ou suspension d'un véhicule, comprenant une bride annulaire (2) de fixation au joint rotule et un écran thermique (3), cet écran s'étendant en hauteur sensiblement perpendiculairement à la bride (2) et en largeur sensiblement le long de la périphérie annulaire de la bride, l'écran et la bride étant formés d'une seule pièce dans une tôle qui est pliée dans une zone de liaison (4) entre l'écran (3) et la bride (2), **caractérisé en ce que** l'écran (3) a un corps central (5) défini par la zone de liaison (4) et présente en outre une partie de surface se présentant sous la forme d'une aile latérale (6) qui s'étend sur au moins un côté de la zone de liaison (4) le long de la périphérie annulaire de la bride (2), cette aile latérale (6) étant séparée de la bride par une échancrure (12) dans la tôle en forme de fente de telle sorte que l'aile latérale (6) est reliée à la bride (2) uniquement par l'intermédiaire du corps central (5).

2. Dispositif selon la revendication 1, dans lequel l'écran comprend deux ailes latérales de part et d'autre de la partie centrale de l'écran.

3. Dispositif selon l'une des revendications 1 ou 2, dans lequel il est prévu dans ladite Pièce en tôle un moyen (8 ; 33, 34) pour bloquer l'aile ou chaque aile le long de la périphérie annulaire de la bride.

4. Dispositif de protection selon la revendication 3, dans lequel le moyen de blocage est formé par deux pattes (8) découpées et pliées sur la bride pour pincer le bord inférieur d'une aile.

5. Dispositif de protection selon la revendication 3, dans lequel le moyen de blocage est formé par une patte (33) formée sur la tôle d'aile et par un trou (34) découpé dans la tôle de la bride.

6. Dispositif de protection selon l'une quelconque des revendications précédentes, **caractérisé en ce qu'**il est prévu des nervures de renfort (7) sur l'aile ou sur chaque aile latérale.

7. Dispositif de protection selon l'une quelconque des revendications précédentes, dans lequel l'aile ou chaque aile latérale (6) a une largeur sensiblement égale à la moitié de ladite zone de liaison entre l'écran et la bride.

8. Dispositif de protection selon l'une quelconque des revendications précédentes, dans lequel la bride comporte une collerette de centrage (9) qui entoure l'ouverture annulaire de la bride.

## Claims

1. Protection device (1) for a ball joint (21), for example a vehicle steering and/or suspension ball joint, comprising an annular flange (2) for fixing it to the ball joint and a thermal shield (3), the height of this shield being substantially perpendicular to the flange (2) and its width lying substantially along the annular periphery of the flange, the shield and the flange being formed in one piece from sheet metal that is bent in a connecting area (4) between the shield (3) and the flange (2), **characterised in that** the shield (3) has a central body (5) defined by the connecting area (4) and a surface part taking the form of a lateral wing (6) that lies along the annular periphery of the flange (2) on at least one side of the connecting area (4), this lateral wing (6) being separated from the flange by a notch (12) of slotted shape in the sheet metal so that the lateral wing (6) is connected to the flange (2) only via the central body (5).

2. Protection device according to claim 1, wherein the shield comprises two lateral wings on respective opposite sides of the central part of the shield.

3. Protection device according to claim 1 or claim 2, wherein said sheet metal part includes means (8; 33, 34) for immobilising the wing or each wing along the annular periphery of the flange.

4. Protection device according to claim 3, wherein the immobilising means are formed by two lugs (8) cut out and bent over the flange to clamp the lower edge of a wing.

5. Protection device according to claim 3, wherein the immobilising means are formed by a lug (33) formed on the sheet metal of the wing and a hole (34) cut into the sheet metal of the flange.

6. Protection device according to any one of the preceding claims, **characterised in that** reinforcing ribs (7) are provided on the lateral wing or each lateral wing.

7. Protection device according to any one of the preceding claims, wherein the lateral wing or each lateral wing (6) has a width substantially equal to half said connecting area between the shield and the flange.

8. Protection device according to any one of the preceding claims, wherein the flange includes a centring collar (9) that surrounds the annular opening in the flange.

## Patentansprüche

1. Schutzvorrichtung (1) für ein Kugelgelenk (21) beispielsweise für die Steuerung und/oder Aufhängung eines Fahrzeugs mit einem Ringflansch (2) zur Befestigung an dem Kugelgelenk und mit einem Hitzeschild (3), wobei sich der Schild in der Höhe im Wesentlichen rechtwinklig zu dem Flansch (2) und in der Breite im Wesentlichen entlang des Ringrands des Flanschs erstreckt, wobei der Schild und der Flansch aus einem Stück aus einem Blech gebildet sind, das in einem Verbindungsbereich (4) zwischen dem Schild (3) und dem Flansch (2) gefalzt ist, **dadurch gekennzeichnet, dass** der Schild (3) über einen Mittelkörper (5) verfügt, der durch den Verbindungsbereich (4) bestimmt ist und weiterhin einen Oberflächenteil aufweist, der als Seitenflügel (6) ausgebildet ist und der sich auf wenigstens einer Seite des Verbindungsbereichs (4) entlang des Ringrands des Flanschs (2) erstreckt, wobei der Seitenflügel (6) von dem Flansch durch einen Schlitz (12) in dem Blech in Gestalt eines Spalts getrennt ist, so dass der Seitenflügel (6) nur über den Mittelkörper (5) mit dem Flansch (2) verbunden ist.

2. Vorrichtung nach Anspruch 1, bei der der Schild beidseitig des Mittelteils des Schilds zwei Seitenflügel aufweist.

3. Vorrichtung nach einem der Ansprüche 1 oder 2, bei der bei dem Blechteil ein Mittel (8; 33, 34) vorgesehen ist, um den oder jeden Flügel entlang des Ringrands des Flanschs zu blockieren.

4. Schutzvorrichtung nach Anspruch 3, bei der das Blockiermittel durch zwei gestanzte und auf den Flansch gefalzte Zungen (8) gebildet ist, um den unteren Rand eines Flügels einzuklemmen.

5. Schutzvorrichtung nach Anspruch 3, bei dem das Blockiermittel durch eine auf dem Flügelblech ausgebildete Zunge (33) und durch ein aus dem Flanschblech gestanztes Loch (34) gebildet ist.

6. Schutzvorrichtung nach einem der vorangehenden Ansprüche, **dadurch gekennzeichnet, dass** Verstärkungsrippen (7) auf dem oder jedem Seitenflügel vorgesehen sind.

7. Schutzvorrichtung nach einem der vorangehenden Ansprüche, bei der der oder jeder Seitenflügel (6) eine Breite aufweist, die im Wesentlichen der Hälfte des Verbindungsbereichs zwischen dem Schild und dem Flansch entspricht.

8. Schutzvorrichtung nach einem der vorangehenden Ansprüche, bei der der Flansch einen Zentrierring (9) aufweist, der die ringförmige Öffnung des Flanschs umgibt.
